(19) Europäisches Patentamt
European Patent Office
Office européen des brevets

(11) EP 2 468 819 B1

(12) # EUROPEAN PATENT SPECIFICATION

(45) Date of publication and mention of the grant of the patent:
**02.07.2014 Bulletin 2014/27**

(51) Int Cl.:
*C08L 67/02* (2006.01) *C08L 77/00* (2006.01)
*C08K 5/098* (2006.01) *C08K 3/10* (2006.01)

(21) Application number: **12160640.4**

(22) Date of filing: **11.03.2009**

(54) **Copper containing polyester-polyamide compositions**

Zusammensetzungen aus Polyester, Polyamid und Kupfer

Compositions de polyester et de polyamide avec du cuivre

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **14.03.2008 US 36906 P**

(43) Date of publication of application:
**27.06.2012 Bulletin 2012/26**

(62) Document number(s) of the earlier application(s) in accordance with Art. 76 EPC:
**09720465.5 / 2 271 710**

(73) Proprietor: **M&G USA Corporation**
**Apple Grove, WV 25502 (US)**

(72) Inventors:
- **Elliott, Guliz Arf**
  **NORTHFIELD CENTER, OH Ohio 44067 (US)**
- **Ferrari, Gianluca**
  **I-30026 PORTOGRUARO (Venezia) (IT)**
- **Ergungor, Zeynep**
  **HUDSON, OH Ohio 44236 (US)**

(74) Representative: **Gerbino, Angelo et al**
**Jacobacci & Partners S.p.A.**
**Corso Emilia 8**
**10152 Torino (IT)**

(56) References cited:
**WO-A-02/081564**
**WO-A-2006/023583**
**US-A- 5 929 178**
**US-A1- 2002 185 775**
**US-B1- 6 353 050**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 468 819 B1

## Description

### Field of Invention:

This specification relates to the field of barrier packaging and resin compositions for barrier packaging.

### Background

It is known that polyamides slightly discolor in the presence of oxygen and heat. However, when polyamides are blended with polyesters and the blend is exposed to heat and oxygen, there is a marked increase in color, indicating a different reaction from thermal oxidation of the polyamide.

It is currently believed that the polyester-polyamide mixtures discolor upon thermal treatment because the acetaldehyde generated from the polyester reacts with the polyamide.

The art also teaches a solution to this problem by keeping the polyester and polyamide in separate compartments of a compartmentalized pellet. However, this method does not help when thermal treatment is needed after the polyester-polyamide has been blended together. This type of blending would occur, for example, during the manufacture of a preform.

After manufacturing of the preform, or in the recycling of the bottle made from the preform, the blend is often ground and then dried under hot air for the purposes of reusing the material. This blend turns yellow during the thermal drying.

The prior art therefore teaches one to stabilize the PET from producing acetaldehyde. This means that one would not place metals into the blend, since the metals are known to cause acetaldehyde in PET.

Copper compounds are known to stabilize the polyamides during thermal processing. United States Patent No. 5,929,178 teaches that to protect polyamide products from deterioration due to thermal oxidation, conventionally, a variety of methods wherein copper compounds are mainly used has been suggested.

United States Patent No. 5,929,178 further discloses a method wherein a copper salt is added as described in British Patent No. 652,947. Yet United States Patent No. 5,929,178 also teaches that nevertheless, the method is accompanied by a defect that the polyamide is colored reddish brown or a deposit insoluble in the polyamide separates when the polyamide containing such a copper salt is melted and molded.

To overcome the defect, there is suggested, for example, a method disclosed in British Patent No. 839,067 wherein a copper compound is used together with an organic or inorganic halide with a method wherein a copper compound is used in combination with a phenolic age-resister or an aromatic amine age-resister with and a method disclosed in Japanese Patent Publication No. 22720/1963 wherein a copper compound is used in combination with a sulfur compound, such as 2-mercaptobenzimidazole.

United States Patent No. 5,929,178 concludes however, when polyamides, such as the polyamide MXD6, are used, even these stabilizers have such problems that the coloring is facilitated extremely and the ability for heat stabilization is not exhibited satisfactorily. Thus, satisfactory stabilizers that solve all the above problems have not yet been found. Particularly in the field of industrial materials for tire cords, filter fabric for papermaking, and the like, the development of materials excellent in heat aging characteristics without impairing such advantages as a high strength, a high Young's modulus, and an excellent hydrolysis resistance is desired.

One of ordinary skill readily recognizes that the visual requirements of colorless and clarity for beverage packaging mean that the defects of reddish brown color and insolubles of copper compounds render the copper compounds useless in compositions intended for food packaging. The reddish brown color and insolubles would destroy the utility of a clear and/or colorless container.

WO-2006/023 583 discloses a melt blended resin for packaging articles comprising: a base polymer, oxidizable organic polymer, transition metal catalyst, and a colorant, such that an article made from said melt blended resin has a CDF of less than about 0.25. The base polymer may be a polyester, the oxidizable organic polymer may be a polyamide, and the transition metal catalyst may be a cobalt salt. WO-2006/023 583 does not specifically disclose the parameters of any process for thermally treating such melt blended resin.

US-5 929 178 discloses a heat-aging resistant polyamide resin composition further comprising a copper compound, an halide compound or a derivative thereof, at least one of hindered phenols and hindered amines, and an organophosphorus compound.

### Summary of the invention

This application discloses a resin composition comprising a polyester, a polyamide, an ionic compatibilizer and a copper compound. The copper compound may be present in the range of about 5 to 500 ppm by the weight of copper to the weight of the polyamide. The copper compound may be cupric stearate. copper iodide, copper (I) or copper (II)

bromide.

It is further disclosed that the ionic compatibilizer may be a metal sulfonate and that the metal sulfonate be incorporated into the polyester polymer.

It is further disclosed that the preferred nylon be MXD6 nylon.

It is further disclosed that the composition contain an iodide compound. The composition may also contain a halogenated compound.

The composition may be made into an article of manufacturing where the article is selected from the group consisting of performs for the manufacturing of the wall of a container and the wall of a container. The article may have a Hunter b* in the range of about -9 to about 4.

The present invention relates to a process for thermally treating a resin pellet comprising the polyester, the ionic compatibilizer, the polyamide, the copper compound and water wherein the process comprises exposing the resin pellet to a temperature in the range of 70°C and 1 °C less than the temperature at which the pellet becomes liquid for a time sufficient to remove 25% of the water from the pellet, or for a time sufficient to increase the Intrinsic Viscosity of the pellet by at least about 0.05 dl/g, as disclosed in claim 1 which follows.

Preferred features of the process of the invention are disclosed in the dependent claims.

Detailed Description

This specification discloses a composition of a polyester, a polyamide and an ionic compatabilizer and a copper compound. It has been discovered that the defects noted in the prior art do not occur in this composition and that the introduction of the copper compound significantly retards the discoloration that occurs in the polyester-polyamide blend.

Any polyester or polyamide suitable for making the desired container is suitable for the current invention. The composition also comprises an ionic compatibilizer either as a third component or incorporated into the polyester chain, or the polyamide chain. A combination of the separate ionic compatibilizer and a polyester or polyamide, or both being modified with an ionic compatibilizer are contemplated. The ionic compatibilizers need not be the same.

Polyesters usable in the process of this invention can be prepared by polymerization procedures well-known in the art. As the industry is always advancing, the polyester may be prepared by inventions or innovations not yet known. A traditional way to prepare polyester polymers and copolymers is the melt phase polymerization involving the reaction of a diol with a dicarboxylic acid, or its corresponding ester. Various copolymers of multiple diols and diacids may also be used.

In general, the polyester polymers and copolymers may be prepared, for example, by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. Polymers with two or more chemically different repeat units in the same macromolecule are termed copolymers. The diversity of the repeat units depends on the number of different types of monomers present in the initial polymerization reaction. In the case of polyesters, copolymers include reacting one or more diols with a diacid or multiple diacids, and are sometimes referred to as terpolymers.

As noted hereinabove, suitable dicarboxylic acids include those comprising from about 4 to about 40 carbon atoms. Specific dicarboxylic acids include, but are not limited to, terephthalic acid, isophthalic acid, naphthalene 2,6-dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic acid, sebacic acid, and the like. Specific esters include, but are not limited to, phthalic esters and naphthalic diesters. As explained later, the sulfoisophthalic acids of a metal salt such as lithium, sodium, and calcium are also suitable dicarboxylic acids.

These acids or esters may be reacted with an aliphatic diol preferably having from about 2 to about 24 carbon atoms, a cycloaliphatic diol having from about 7 to about 24 carbon atoms, an aromatic diol having from about 6 to about 24 carbon atoms, or a glycol ether having from 4 to 24 carbon atoms. Suitable diols include, but are not limited to, ethylene glycol, 1,4-butanediol, trimethylene glycol, 1,6-hexanediol, 1,4-cyclohexanedimethanol, diethylene glycol, resorcinol, 1,3-propanediol and hydroquinone.

A useful polyester is a crystallizable polyester with more than 85% of its acid units being derived from terephthalic acid. It is generally accepted that polyesters with greater than 15% comonomer modification are difficult to crystallize. However, this invention includes polyesters which would crystallize and have more than 15% comonomer content. This invention also includes polyesters which do not crystallize and/or have more than 15% comonomer content.

Polyfunctional comonomers can also be used, typically in amounts of from about 0.01 to about 3 mole percent. Suitable comonomers include, but are not limited to, trimellitic anhydride, trimethylolpropane, pyromellitic dianhydride (PMDA), and pentaerythritol. Polyester-forming polyacids or polyols can also be used. Blends of polyesters and copolyesters may also be useful in the present invention.

One suitable crystallizable polyester is polyethylene terephthalate (PET) or a copolymer modified with lithium

sulfoisophthalate formed from the di-ester or di-carboxylic acid of lithium sulfoisophthalate in the approximately 1:1 stoichiometric reaction of acids, or their di-esters, with ethylene glycol. Copolymers are also suitable. Specific copolymers and terpolymers of interest are crystallizable polyesters comprising lithium sulfoisophthalate in combinations of isophthalic acid or its diester, 2,6 naphthalate dicarboxylic acid or its diester, and/or cyclohexane dimethanol. The optimal levels of lithium sulfoisophthalate are within the range of 0.1 and 2.0 mole percent based upon the acid moieties in the polymer. While greater than 2.0 mole percent is not deleterious to the increasing the dispersion of the polyamide in the polyester, greater than 2.0 mole percent achieves little or no additional improvement.

The amount of sulfonate, in particular, for example, lithium sulfoisophthalate (derived from 5-sulfoisophthalic acid monolithium salt), is about 0.05 to 10.0 mole percent, with an optimal amount being with the range of about 0.1 to about 2.0 mole percent, with the range of about 0.1 to about 1.1 mole percent being more optimal, and about 0.18 to about 0.74 being even better yet, with the range of about 0.18 to about 0.6 mole percent being the most optimal range.

The esterification or polycondensation reaction of the carboxylic acids or esters with glycol typically takes place in the presence of a catalyst. Suitable catalysts include, but are not limited to, antimony oxide, antimony triacetate, antimony ethylene glycolate, organomagnesium, tin oxide, titanium alkoxides, dibutyl tin dilaurate, and germanium oxide. These catalysts may be used in combination with zinc, manganese, or magnesium acetates or benzoates. Catalysts comprising antimony are preferred.

Another preferred base polyester is polytrimethylene terephthalate (PTT). It can be prepared by, for example, reacting 1,3-propanediol with at least one aromatic diacid or alkyl ester thereof. Preferred diacids and alkyl esters include terephthalic acid (TPA) or dimethyl terephthalate (DMT). Accordingly, the PTT preferably comprises at least about 80 mole percent of either TPA or DMT. Other diols which may be copolymerized in such a polyester include, for example, ethylene glycol, diethylene glycol, 1,4-cyclohexane dimethanol, and 1,4-butanediol. In addition to the ionic compatibilizer such as sulfoisophthalic acid, other aromatic and aliphatic acids which may be used simultaneously to make a copolymer include, for example, isophthalic acid and sebacic acid.

Preferred catalysts for preparing PTT include titanium and zirconium compounds. Suitable catalytic titanium compounds include, but are not limited to, titanium alkylates and their derivatives, titanium complex salts, titanium complexes with hydroxycarboxylic acids, titanium dioxide-silicon dioxide-co-precipitates, and hydrated alkaline-containing titanium dioxide. Specific examples include tetra-(2-ethylhexyl)-titanate, tetrastearyl titanate, diisopropoxy-bis(acetyl-acetonato)-titanium, di-n-butoxy-bis(triethanolaminato)-titanium, tributylmonoacetyltitanate, triisopropyl monoacetyltitanate, tetrabenzoic acid titanate, alkali titanium oxalates and malonates, potassium hexafluorotitanate, and titanium complexes with tartaric acid, citric acid or lactic acid. Preferred catalytic titanium compounds are titanium tetrabutylate and titanium tetraisopropylate. The corresponding zirconium compounds may also be used.

The polyesters may also contain small amounts of phosphorous compounds, such as phosphates and phosphites, and a catalyst such as a cobalt compound, that tends to impart a blue hue. Also, small amounts of other polymers such as polyolefins can be tolerated in the continuous matrix. Triethyl phosphite is an example of a phosphite.

After completion of the melt phase polymerization, the polymer is either made into a form such as a film or part or stranded and cut into smaller chips, such as pellets. The polymer is usually then crystallized and subjected to a solid phase (solid state) polymerization (SSP) step to achieve the intrinsic viscosity necessary for the manufacture of certain articles such as bottles. The crystallization and polymerization can be performed in a tumbler dryer reactor in a batch-type system. The solid phase polymerization can continue in the same tumble dryer where the polymer is subjected to high vacuum to extract the polymerization by-products

Alternatively, the crystallization and polymerization can be accomplished in a continuous solid state polymerization process whereby the polymer flows from one vessel to another after its predetermined treatment in each vessel. The crystallization conditions are relative to the polymer's crystallization and sticking tendencies. However, preferable temperatures are from about 100 °C to about 235 °C. In the case of crystallisable polyesters, the solid phase polymerization conditions are generally 10°C below the melt point of the polymer. In the case of non-crystallisable polyesters, the solid phase polymerization temperature is generally about 10°C below temperature where the polymer begins sticking to itself. While traditional solid phase polymerization temperatures for crystallisable polymers range from about 200°C to about 232 °C, many operations are from about 215°C to about 232 °C. Those skilled in the art will realize that the optimum solid phase polymerization temperature is polymer specific and depends upon the type and amount of copolymers in the product. However, determination of the optimum solid phase polymerization conditions is frequently done in industry and can be easily done without undue experimentation.

The solid phase polymerization may be carried out for a time sufficient to raise the intrinsic viscosity to the desired level, which will depend upon the application. For a typical bottle application, the preferred intrinsic viscosity (I.V.) is from about 0.65 to about 1.0 deciliter/gram, as determined by the method described in the methods section. The time required to reach this I.V. from about 8 to about 21 hours.

In one embodiment of the invention, the crystallizable polyester of the present invention may comprise recycled polyester or materials derived from recycled polyester, such as polyester monomers, catalysts, and oligomers.

The term crystallizable means that the polyethylene terephthalate can be become semi-crystalline, either

through orientation or heat induced crystallinity. It is well known that no plastic is completely crystalline and that the crystalline forms are more accurately described as semi-crystalline. The term semi-crystalline is well known in the prior art and is meant to describe a polymer that exhibits X-ray patterns that have sharp features of crystalline regions and diffuse features characteristic of amorphous regions. It is also well known in the art that semi-crystalline should be distinguished from the pure crystalline and amorphous states.

A terephthalate polymer which cannot become crystalline is a non-crystallizable polyester and is also believed suitable to use in this invention.

The polyamides which could be modified or unmodified that are suitable for this invention can be described as comprising the repeating unit amino caproic acid or A-D, wherein A is the residue of a dicarboxylic acid comprising adipic acid, isophthalic acid, terephthalic acid, 1,4-cyclohexanedicarboxylic acid, resorcinol dicarboxylic acid, or naphthalenedicarboxylic acid, or a mixture thereof, and D is a residue of a diamine comprising m-xylylene diamine, p-xylylene diamine, hexamethylene diamine, ethylene diamine, or 1,4 cyclohexanedimethylamine, or a mixture thereof.

These polyamides can range in number average molecular weight from 2000 to 60,000 as measured by end-group titration. These polyamides can also be described as the reaction product of amino caproic acid with itself and/or the reaction product of a residue of dicarboxylic acid comprising adipic acid, isophthalic acid, terephthalic acid, 1,4-cyclohexanedicarboxylic acid, resorcinol dicarboxylic acid, or naphthalenedicarboxylic acid, or a mixture thereof with a residue of a diamine comprising m-xylylene diamine, p-xylylene diamine, hexamethylene diamine, ethylene diamine, or 1,4 cyclohexanedimethylamine, or a mixture thereof.

Those skilled in the art will recognize many of the combinations as well known commercially available polyamides. The reaction product of the residue of sebacic acid with hexamethylene diamine is nylon 6, 10 and the reaction product of the residue of adipic acid and hexamethylene diamine is nylon 6, 6. Nylon 6, 12 is another nylon which benefits from the invention. Nylon 6 is a special type of polyamide which is made by the opening of caprolactam and then polymerizing the resulting amino caproic acid which has a formula of $H_2N\text{-}(CH_2)_5\text{-}COOH$. One useful polyamide is the reaction product of the residues of adipic acid and m-xylylene diamine, known as poly-m-xylylene adipamide. This product is commercially known as MXD6 or nylon MXD6 and can be purchased from Mitsubishi Gas Chemical Company, Japan.

The preferred amount of polyamide is between 1 and 15 parts per 100 parts of the polyester plus polyamide, preferably between 3 and 8 parts per 100 parts of the polyester plus polyamide, with the most utility occurring between 3 and 7 parts of polyamide per 100 parts of polyester plus polyamide.

It is also preferred that the polyamide contain a stabilizer such as sodium hypophosphite, or other inorganic phosphite stabilizer. Levels of the stabilizer should be between 10 and 500ppm on the basis of the polyamide. However, the polyamide may also be free of a phosphite stabilizer.

Preferably, the ionic compatibilizer is derived from a co-monomer that has been reacted into the polymer chain. To be a co-monomer, the ionic compatibilizer is functionalized with at least one end group which allows the ionic compatibilizer to react with at least one of the other polymers or polymer co-monomers in the composition.

In the case of polyesters, these can be the polar co-monomers used to create polyester ionomers. In the case of polyamides, the ionic compatibilizer can be the polar co-monomers used to create polyamide ionomers. Examples of these co-monomers are the monovalent and/or divalent salt of the respective sulfonate described in United States Patent No. 6,500,895 (B1) the teachings of which are incorporated herein. Also included are the monovalent and bivalent metal salts described in the following formulas found in Japanese Patent Application 0 3281246 A.

One way to describe the various metal salts is to use the term functionalized metal sulfonate to describe a compound of the form $R\text{-}SO_3M$, where M is the metal ion and R is an aliphatic, aromatic, or cyclic compound with at least one functional group that allows the functionalized metal salt to react with the polyester or polyamide, or their respective monomers or oligomers where M designates the metal ion. Functionalized metal sulfonates included in this invention are the lithium, sodium, and potassium salts of sulfonated comonomers, including aliphatic and aromatic alcohols, carboxylic acids, diols, dicarboxylic acids, and multifunctional alcohols, carboxylic acids, amines and diamines. In contrast, non-functional metal sulfonates are those of the $R\text{-}SO_3M$, and R does not have functional group. The phrase metal sulfonate therefore refers to both functional and non-functional metal sulfonates. An example of this sulfonated polystyrene or polyolefins which are known to act as ionic compatibilizers in the polyester-polyamide systems.

In general, the ionic compatibilizer is incorporated from a functionalized form of the form X-R, where X is an alcohol, carboxylic acid or epoxy, most preferably a dicarboxylic acid or diol and R is R is $-SO_3M$, -COOM, -OM, $-PO_3(M)_2$, with M being a metal in a +1 or +2 valence state which can be selected from the group consisting of Li, Na, Zn, Sn, K and Ca and X-R is copolymerized into the polyester polymer to modify the interfacial tension. The amount of X-R needed will exceed 0.01 mole percent with respect to the total number of respective dicarboxylic acid or diol moles in the polymer composition. It is possible for X-R to include both a diol or dicarboxylic acid. In that case, the mole percent is based upon the total number of moles of respective diols, dicarboxylic acids, or polymer repeating units.

The functionalized ionic compatibilizer may contain 2 or more R groups. R is combined directly to the aromatic ring of X, which could be a diol, a dicarboxylic acid, or a side chain such as a methylene group.

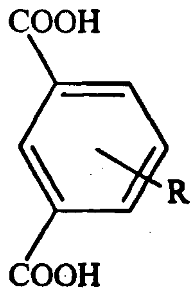

Where R is $-SO_3M$, -COOM, -OM, - $PO_3(M)_2$ with M designating a metal in a +1 or +2 valence state which can be selected from the group consisting of Li, Na, Zn, Sn, Ca and K.

The dicarboxylic acids represented by X may be each ortho, meta, or para. They comprise for instance aromatic dicarboxylic acids such as terephthalic acid, isophthalic acid, orthophthalic acid, naphthalene dicarboxylic acid, diphenylether dicarboxylic acid, diphenyl-4,4-dicarboxylic acid etc..

X may also be aliphatic. In that event, aliphatic dicarboxylic acids such as oxalic acid, malonic acid succinic acid, glutaric acid, adipic acid, pimelic acid, suberic acid, azelaic acid, sebacic acid, etc. are suitable. Cycloaliphatic dicarboxylic acids such as cyclohexanedicarboxylic acid and one or more species of these can be used. Also included is isethionic acid. Specifically contemplated are mixtures of the dicarboxylic acids as well.

X can also represent an alcohol, preferably a diol of the structure:

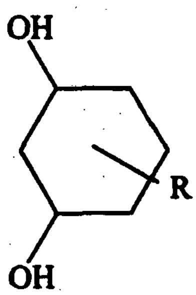

Where R is $-SO_3M$, -COOM, -OM, - $PO_3(M)_2$ where M is a metal in a +1 or +2 valence state which can be selected from the group consisting of Li, Na, Zn, Sn, K, and Ca.

The diols represented by X may also be aliphatic glycols such as ethylene glycol, 1,3 propanediol, 1,4-butanediol, 1,5-pentanediol, 1,6-hexanediol, 1,9-nonanediol, diethylene glycol, trimethylene glycol and cycloaliphatic diols such as cycloheaxanediol, cycloheaxanedimethanol and one or more species in combination can be used. Among these, ethylene glycol, diethylene glycol and cyclohexanediol are preferred.

Other functionalized ionic compatibilizers which can be used include hydroxyl terminated polyethers, such as polyethylene glycol (Carbowax) and cyclic amides such as ethoxylated dimethyl hydantoin. In addition, polyesters can be reacted with epoxy terminated compounds, including epoxy terminated polyethers, to produce a polyether side chain attached to the polymer.

While many metals work and the prior art teaches that bi-metals are preferred, it has unexpectedly been discovered that lithium, a monovalent metal, performs much better than sodium. In fact, the lithium salt produces a dispersion with average domains lower than levels previously measured. As described below, the lithium sulfoisophthalate without a cobalt compound has better colour than the sodium sulfoisophthalate blended with the same amount of MXD6 in the presence of a cobalt salt as described in WO 2005/023530 A1.

The molecular structure of lithium sulfoisophthalic acid is:

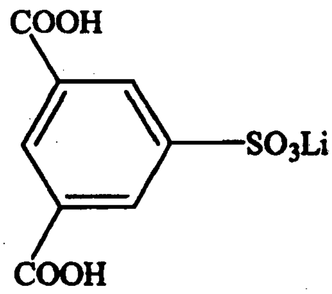

Lithium sulfoisophthalic acid (LiSIPA) or sulfonic acid lithium salt modified isophthalic acid.

As is evident from the above diagram, the lithium sulfoisophthalic acid comprises is a lithium sulfonate and comprises lithium sulfoisophthalate. The lithium sulfoisophthalate refers to the compound as it is appears incorporated into the polymer chain. This is also known as the repeating unit of lithium sulfoisophthalic acid. Lithium sulfoisophthalate therefore is the lithium sulfoisophthalic acid less one water molecule, with one hydroxyl group removed from one of the carboxyl end groups and a hydrogen removed from the other carboxyl end group. This molecule is then attached to one or more monomers ($R_1$ and $R_2$) in the polymer backbone.

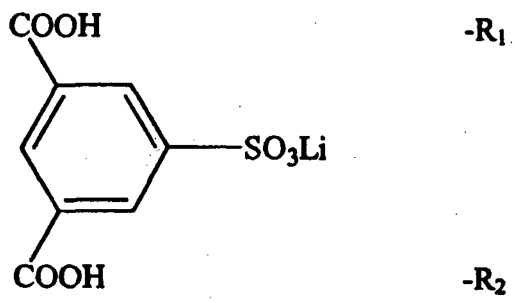

The sulfonate, in this case lithium sulfoisophthalate, is the molecule between the two R groups. Again, R could be the same monomer, in the case of PET, the R's are likely the same being the ethylene glycol moiety as reacted into the polymer chain.

Of the salt forms, the di-carboxylic acid, di-ester, or pre-reacted low molecular weight oligomers such as the bis-hydroxyethyl ester of lithium sulfoisophthalate are preferred. It is also possible that the ionic compatibilizer, in this case the lithium sulfonate, occur in the diol form as well. Possible alternatives are ethylene glycol with the sulfonate group at the end of the pendant chain. It has even been proposed to place the sulfonate at the end of the polyester molecule. This can be accomplished by reacting or copolymerizing the polyester with the sulfonated salt of benzoic acid or other monofunctional species such as isethionic acid, either in the melt reactor or in an extruder.

In order to be reacted into either polymer, the modifying agent must have at least one functional group. These functional groups are carboxylic acid (-COOH), alcohol (-OH), the ester of the carboxylic acid, epoxy termination, the diamine, or amine end groups.

Because a high I.V. polyester would have two functional end groups, a high I.V. polyester containing a metal sulfonate in its backbone is an ionic compatabilizer when blended with a polyamide and a polyester that does not contain a metal sulfonate. Should the high I.V. polyester have both ends terminated, it would be considered a non-functionalized ionic compatibilizer.

The non-functionalized ionic compatibilizers are those compounds which contain the polar group, in particular the lithium salt, but do not have any functional end groups which allow the ionic compatibilizer to react with the polyester or polyamide. The lithium salt of sulfonated polystyrene is an example. In the three component system, the mole percent of the ionic compatibilizer is the mole percent based upon all the acid groups of the polyester.

As taught below, the polymer is preferably modified with the ionic compatibilizer. This modification is done by copolymerizing the ionic compatibilizer into the polymer chain.

The composition can exist in a two component form. In the two component form, the ionic compatibilizer is incorporated into the polyester backbone to make the polyester both a polyester and an ionic compatibilizer. Thus the single polyester molecule contains two elements of the claim - a polyester and an ionic compatibilizer.

The composition can also exist with more than two components. For instance, a polyester without the ionic compatibilizer, a polyester with the ionic compatibilizer, and the polyamide.

Levels of the ionic compatibilizer needed to decrease the interfacial tension range from 0.01 mole percent to 15 mole percent with respect to the total number of moles of the respective acid or diol moiety in the composition. For example, a typical homopolymer polyester has 100 mole percent terephthalate derived from terephthalic acid and almost 100 mole percent ethylene derived ethylene glycol, with the remaining glycol being diethylene derived from diethylene glycol which is derived in situ during the manufacturing process. A 100 moles of polymer with 5 mole percent of the ionic dicarboxylic acid co-monomer, such as lithium sulfoisophthalic acid would contain 95 moles of terephthalate derived from terephthalic acid, 5 moles lithium sulfoisophthalate and approximately 100 moles of ethylene derived ethylene glycol. Similarly, it may be advantageous to use another comonomer such as isophthalic acid. For example, if one could substitute 2 moles of the terephthalate with 2 moles of isophthalate and create a polymer with 2 moles isophthalate, 93 moles terephthalate, 5 moles sulfoisophthalate and approximately 100 moles ethylene to make 100 moles of polymer repeat unit.

In the three component blend system, the moles of acid are the moles of acid in the modified polymer plus the moles of acid in the compatable unmodified polymer. For example, if there were two polyesters present, one containing sulfoisophthalate, and the other did not, the mole percent of the sulfoisophthalate would be the moles of sulfoisophthalate divided by the moles of acid moieties of the two polyesters added together.

It is also well known that di-ethylene glycol is formed in-situ in the manufacture of polyester and about 1-3 percent of the total moles of glycol derived repeat unit will be diethylene derived from diethylene glycol. Therefore, the polyester compositions are typically 97 mole percent ethylene and 3 mole percent di-ethylene.

The amount of ionic compatibilizer needed is determined empirically. Generally, a small amount is needed and approaches a critical amount beyond which additional amounts have little or no affect. In the surface science field, this amount is referred to as the Critical Micelle Concentration (CMC). As seen in the examples, a small amount of sulfonated material has a significant effect, but at a certain point, around 0.4 or 0.7 mole percent in the case of lithium sulfonated isophthalic acid, no increase in effectiveness is seen. Levels above the CMC would be the functional equivalent of the CMC as it pertains to reducing the interfacial tension of the polyester-polyamide. Unlike other salts, the lithium salt, in particular shows an optimum level at approximately between 0.3 and 1.0 moles per 100 moles polymer repeat unit. This can also be expressed as 0.2 to 1.0 mole percent of the acid or glycol moiety to which the lithium salt is attached.

Polyesters modified with the ionic compatibilizer employed in the present invention can be prepared by polymerization procedures. The traditional techniques can be divided into the ester, acid, and modified processes. In the ester process, the dimethyl ester of the carboxylic acid or acids is reacted with the glycol or glycols in the presence of heat and the methanol removed yielding the bis-hydroxyethyl ester of the acids. The bis-hydroxyethyl ester is then polymerized in its liquid form by subjecting the material to vacuum and heat to remove the glycols and increase the molecular weight. A typical process for the object polymer with an ionic compatibilizer would start with these ratios: 98 moles of dimethyl terephthalate, 2 moles of dimethyl sodium salt of sulfoisophthalate and 220 moles of glycol, typically ethylene glycol. Of the 220 moles of glycol, 120 are excess which are removed during processing. It should be noted that it is possible to obtain the sulfonated co-monomer in either its bis-(hydroxyethyl) or dimethyl ester form.

For clarification, the phrase copolymerized with at least X percent of a specific acid means that the compound is considered as part of the acid group of the polymer, such as terephthalic or isophthalic acid. It provides the reference to determine how many moles of the compound to use. The phrase does not mean that the compound must be added to the process as an acid. For example, lithium sulfoisopthalic acid could be copolymerized into polyethylene terephthalate as the acid with two carboxylic end groups, as the dimethyl ester of the carboxylic acid, as the bis-hydroxy ester of the dimethyl ester, as very low molecular weight oligomers of a glycol acid polymer where the acid moieties are at least in part, the sulfoisophthalate salt, or as the di-alcohol.

The phrase "copolymerized salt of the acid" should not limit the claim to only using the acid form, but should be read to mean that the compound is one of the acid derived groups in the polymer.

The phrase "copolymerized with" means that the compound has been chemically reacted with the polymer, such as in the polymer chain or as a pendant group. For example, a polyester copolymerized with lithium sulfoisophthalate, or modified by copolymerizing at least 0.01 mole percent sulfoisophthalate into the polyester, means that sulfoisophthalate is bonded to the polymer, including bound into the polymer chain, with at least one chemical bond. The phrases are indifferent to how the material is incorporated into the polymer. A polyester copolymerized with lithium sulfoisophthalate, or modified by copolymerizing at least 0.01 mole percent lithium sulfoisophthalate into polyester refers to a polyester containing the lithium sulfoisophthalate whether that lithium sulfoisophthalate was incorporated using but not to limited to lithium sulfoisophthalic acid, lithium sulfobenzoic acid, the dimethyl ester of lithium sulfoisophthalic acid, the methyl ester of lithium sulfobenzoic acid, the di-alcohol of lithium sulfoisophthalate, the lithium sulfohydroxy benzene, the lithium salt of hydroxy benzene sulfonic acid, or oligomers or polymers containing the lithium sulfoisophthalate.

While the preceding paragraph used lithium as an example, the same would be true for the sodium and other metal salts. It should be noted that the references to lithium in this specification should not limit the claims to just the

lithium salt. While lithium is the preferred metal, the use of the polyamides within the specified amino to acid end group ratio has been effectively demonstrated with other metals as demonstrated in the examples.

The phrases "and derivatives" and "and its derivatives" refer to the various functionalized forms of the interfacial reducing agent which can be copolymerized into the polymer. For example, lithium sulfoisophthalate "and its derivatives" refers collectively and is not limited to lithium sulfoisophthalic acid, the dimethyl ester of lithium sulfoisophthalic acid, the bis-hydroxyethyl ester of lithium sulfoisophthalic acid, the di-alcohol of lithium sulfoisophthalate, low molecular weight oligomers, and high I.V. polymers containing lithium sulfoisophthalate in the polymer chain.

The same nomenclature applies to the glycol or alcohol containing the ionic compatibilizer.

In the acid process, the starting materials are the di-carboxylic acids, with water being the primary by-product. The charge ratio in a typical acid process is 98 moles terephthalic acid, 2 moles of a metal salt of sulfoisophthalic acid (e.g. lithium sulfoisophthalic acid - LiSIPA), and 120 moles of glycols, typical ethylene glycol. After reaction of the glycols with the acids, the material is subjected to the same polymerization process conditions as the ester process. In practice, the many of the salts degrade and are therefore added in as a pre-reacted bis-hydroxy ester form as described in the examples.

The modified processes are variations of either process; combining the intermediary product at certain steps. For example, the acid process may be used with just terephthalic acid to produce its low molecular weight intermediate and the ester process used to produce the bis-hydroxyethyl ester of the homopolymer sulfonated polyester. These two intermediates are then combined and polymerized to a more random copolymer. Another variation is to add the finished modified polymer to the melt reactor and let the melt process depolymerise the modified polymer and then form a random copolymer. While the three component system, of PET, PET - ionomer, and polyamide has not been found to be as effective as the more random copolymer of the two component system (PET-ionomer, polyamide), the three component system is considered a part of this invention.

Another technique for manufacturing the modified polymer is to completely trans-esterify a modified polyester with a large amount of ionic compatibilizer moieties into a unmodified polyester to create a blockier copolymer. This can be done using other techniques such as a long residence time and/or high temperature extrusion.

Other methods of incorporating similar co-monomers are provided in United States Patent Numbers 3,936,389, 3,899,470, 5,178,950, and United States Statutory Invention Registration H 1760.

In the process of making the composition, the polyester, polyamide, and ionic compatibilizer are melt blended by any of the known techniques and then molded, formed or cast into an article. Melt blending involves heating the separate materials so that at least the polyester and the polyamide are liquid and exposing the liquids to shear stress. This can occur in an extruder or a heated vessel and can be done continuously or in a batch operation. If the ionic compatibilizer is not bound into the polyamide or polyester, the temperature should be sufficient to liquefy it as well. The actual blending could occur in a stirred vessel or extruder, such as injection molding machine. After the material is melt blended it is shaped into an article.

Examples of the articles are films, fibers, pellets, preforms, and injection molded shapes. Often these articles are further treated to make a different article such as a bottle, container, tray, or stretched film. In some cases, the composition is introduced as a layer in the article and becomes a layer in the final produced article.

To make the article, the melt blend will pass through a nozzle or die. In the case of films or sheets, the blended composition is pushed through a die and usually onto a roll. In the case of a preform or injection molded part, the melt blended composition is pushed into the mold and takes the shape of the mold. In the case of the pellet, the melt blended composition is pushed through a hole making a strand that is cut. In the case of the fiber, the strand remains uncut and is wound onto a bobbin.

Because the polyamide and polyester are both hydroscopic, it is preferable to dry both of them prior to melt blending. In general, the amount of moisture contained by the materials to be blended should not exceed 30ppm water on the basis of the total amount of polyester in composition when melt blending.

Copper salts of organic compounds are suitable examples of copper compounds useful in the composition. The copper salt of the organic compound may be copper salts of organic monocarboxylic acids, and, more particularly, copper salts of aliphatic mono-carboxylic acids having from 2 to 20 carbon atoms, for example, acetic, butyric, lauric, palmitic, stearic and resin acids, and copper salts of beta-diketone such as acetyl-acetone, diacetyl-acetone, proprionyl-acetone and benzoyl acetone. Cu(II) stearate and Cu(II) acetate are examples of specific copper compounds.

Inorganic copper compounds, such as CuI, CuBr, and $CuBr_2$ are also suitable.

It is preferable that the copper compound be as colorless as possible. The copper compound selected for low color containers should be one which does not impart substantial color to the pellets. However, for colored containers, the color of the compound is not so essential.

The Hunter b* color of the composition as measured on amorphous pellets should be between -9.0 and +6.0. For the wall of the container wall, the color of the wall should be between -9.0 and +6.0 as well. Preferred color ranges of the articles are -9.0 and +4.0, -7.0 and +6.0, -7.0 and +4.0, -5.0 and +6.0 and -5.0 and +4.0.

The copper salt can be incorporated into the polyamide by addition prior to or during the polymerization or

interpolymerization step for the preparation of polyamide. The copper salt may also be incorporated when the polyamide is melted in an extruder or other mixing device.

The copper salt will be preferably present at a level of about 5 to about 500 ppm by the weight of copper to the weight of the polyamide. Other ranges are of about 10 to about 400 ppm by the weight of copper to the weight of the polyamide. The amount could be greater than 500ppm, but believed to be of diminishing effect. Therefore a suitable amount is at least 5ppm by the weight of copper to the weight of the polyamide.

It is believed that complexes of copper and at least one organic halogen compound is also preferred. It is believed to be even more preferred to have the composition also contain at least one copper complex with a phosphine compound and/or mercaptobenzimidazole compound is contained, which complex shows halogen-carbon-bonds.

It is believed all copper complexes may by used. Typical examples of complex ligands are triphenyl phosphines, mercaptobenzimidazole (MBI), 2-mercaptobenzimidazole (2-MBI), EDTA, acetylacetonate, glycin, ethylenedlamine, oxalate, diethylenetriamine, triethylene tetraamine, pyridine, diphosphone and dipyndyl. These ligands may be employed singly or in combination for complex formation. The necessary synthesis are known to the skilled person or described in the literature. As usual these complexes may contain, in addition to the above-named ligands, inorganic ligands such as water, chloride, cyano etc.

Preferred are copper complexes with the ligands triphenylphosphine, mercaptobenzenimidazole, acetylacetanate, acetylacetanoate and glycin. Particularly preferred are triphenylphosphine and mercaptobenzimidazole. Preferred copper complexes used in accordance with the present invention are typically prepared by the reaction of copper (I) ions with phosphine or mercaptobenzimidazole compounds. For example these complexes can be obtained by reacting triphenyl phosphine with copper (I) halide suspended in chloroform (G.Kosta, E. Resienhefer and L.Stafani, J. Inorg. Nuki. chem 27 (19565) 2581). It is however possible to react copper (II) compounds with triphenyl phosphine under reductive conditions, in order to obtain the copper (II) addition compounds (FU Jardine. L. Rule, A.G. Vorhei, J. Chem. Soc. (Q) 238-241 (11970).

Useable copper compounds for the preparation of these complexes are copper (I) or (II) salts of halogen acids or cyan acids or copper salts of the aliphatic carboxylic acids-Examples for suitable copper salts are copper (I) chloride, copper (I) bromide, copper (I) iodide, copper (I) cyanide, copper (II) bromide, copper (II) chloride, copper (II) acetate or copper (II) stearate.

In particular preferred are copper (I) iodide and copper (I) cyanide. Generally all alkyl or aryl phosphines are suitable. Example of phosphines employable in accordance with the present invention are triphenylphosphine and the substituted triphenylphosphines, trialkylphosphines but also diarylphosphines. One example of a suitable trialkylphosphine is tris-n-butyl phosphine. Tri-phenylphosphine is in view of the commercial availability preferred, in particular regarding economic issues. Generally the triphenylphosphine complexes are more stable than the trialkylphosphine complexes.

Examples of suitable complexes can be represented by the following formulae: $[Cu(PPh_3)_3X]$, $[Cu_2X_2(PPh_3)_3]$, $[Cu(PPh_3)]_4$, $[Cu(PPH_3)ZX]$, X selected from the group consisting of Cl, Br, CN, SCN or 2-MBI.

Complexes which may be used in accordance with the present invention may contain further complex ligands. Examples in this respect are Bipyridyl (for example $CuX(PPh_3)$(bipy), X is Cl, Br or I), Biquinoline (for example CuX $(PPh_3)$(biquin), X is C Br or I),and 1,10-Phenanthrolin, o-Phenylenebis(dimethylarsin), 1,2;bis-(diphenylphosphino)ethan and terpyridyl.

The tetrameric copper complexes have higher melting points of from 210 to 270 °C. Preferred are copper complexes with a lower number a phosphine ligands, from the economic point of view. Preferred are therefore in particular the tetrameric complexes.

The organic halogen compound may be any organic halogen compound. In view of processing stability and for the inhibition of embrittlement due to flow out of the organic halogen compound from the stabilized polyamide composition the molecular weight of the organic composition should be selected in order to secure that the compound is not easily volatile. This selection is also preferred in view of workplace security and view of the toxicological classification of the polyester-polyamide composition. Easily volatile organic halogen compounds furthermore do have a strong tendency to discoloration even though they satisfy the other requirements. Preferred as organic halogen compounds are in particular bromine containing compounds and/or aromatic compounds. Generally all organic halogen compounds may be employed. Examples of suitable organic halogen compounds are aromatic compounds, such as dekabromediphenyl, dekabromdiphenol ether, chlorinated or brominated styrene oligomers, polydibromestyrene, tetrabromebisphenyl-A, tetra bisphenyl-A derivatives, such as epoxy derivatives, such as BEB 6000 and BEG 500C, which formulas are given below, and chlorinated dimethanedibenzo(a,e)cycloocten derivatives. Examples of suitable aliphatic compounds are chloroparafin, polyvinyl chloride, polyvinylidene chloride, polytetrafluoroethylene or fluoro rubber.

Organic compounds which contain further hetero atoms are suitable. Examples of such compounds are halogenated aliphatic phosphates, halogenated aromatic phosphates and halogen containing organic compounds which contain sulfur or nitrogen atoms. Examples of suitable phosphates are tris(tribromoneopentyl)phosphate (phosphate 1) and di bromodioxaphosphorinean derivatives and chlorine containing polyphosphonates.

These compounds can be used singly or in combination.

If carbon-halogen-bonds are present in the complex of copper these bonds are preferably carbon-bromine bonds. In particular preferred are compounds containing TPP-Br3 or 2-MBI-Br2, in particular TPP-Br6/CuI. Of particular interest is CuBr (cuprous bromide) and $CuBr_2$ (cupric bromide).

The amount of copper complex used in the polyamide compositions is not particularly limited. Usually the amount is between 5 and 1000 ppm copper, based on the polyamide. Preferably 10 to 700 ppm copper, in particular 20 to 150 ppm copper are employed. The addition amount for the halogen-containing compound is not particularly limited. Usually amounts are added resulting in 20 to 30,000 ppm halogen, based on the polyamide. Preferred are 30 to 10,000, in particular 500 to 1500 ppm halogen. Accordingly usually a ratio of copper to halogen in the polyamide composition of from 1:0.1 to 1:100 is obtained. Preferred is the range of from 1:2 to 1:100, in particular the range from 1:5 to 1:15 (based on the molar ratio).

The polyester, polyamide, compatabilizer and the copper compound and other ingredients can be combined in a melt mixing process such as extrusion, and made into a form such as a film or part or stranded and cut into smaller chips, such as pellets. The resin pellet can then be thermally processed, which involves exposing the pellet or mass of pellets to a temperature in the range of 70 °C to 5 °C below the melting point in the case of crystallized polyester and 5 °C below the flowing point of the noncrystallizable polyester for a time sufficient to achieve the desired effect. The desired effect is at least one step selected from the group of increasing the crystallinity of the polyester by at least 5%, removing at least 25% of the moisture present in the pellet prior to thermally processing the pellet, and raising the intrinsic viscosity of the resin pellet by at least 0.1 dl/g. Generally this time is at least one hour and may be as long as 48 hours. Therefore suitable ranges are 1 to 48 hours, 1 to 24 hours and 1 to 12 hours.

The thermal process can be performed in a tumbler dryer reactor in a batch-type system. The solid phase polymerization can continue in the same tumble dryer where the polymer is subjected to high vacuum to extract the polymerization by-products

Alternatively, the crystallization and polymerization can be accomplished in a continuous solid state polymerization process whereby the polymer flows from one vessel to another after its predetermined treatment in each vessel. The crystallization conditions are relative to the polymer's crystallization and sticking tendencies. However, preferable temperatures are from about 100 °C to about 235 °C. In the case of crystallisable polyesters, the solid phase polymerization conditions are generally 10 °C below the melt point of the polymer. In the case of non-crystallisable polyesters, the solid phase polymerization temperature is generally about 10 °C below temperature where the polymer begins sticking to itself. While traditional solid phase polymerization temperatures for crystallisable polymers range from about 200°C to about 232 °C, many operations are from about 215°C to about 232 °C. Those skilled in the art will realize that the optimum solid phase polymerization temperature is polymer specific and depends upon the type and amount of copolymers in the product. However, determination of the optimum solid phase polymerization conditions is frequently done in industry and can be easily done without undue experimentation.

The solid phase polymerization may be carried out for a time sufficient to raise the intrinsic viscosity to the desired level, which will depend upon the application. For a typical bottle application, the preferred intrinsic viscosity (I.V.) is from about 0.65 to about 1.0 deciliter/gram, as determined by the method described in the methods section. The time required to reach this I.V. is from about 8 to about 21 hours. The solid phase polymerization is often carried out in the presence of an inert gas, such as nitrogen, to remove the reaction by-products from the pellet.

The removal of the moisture may be done in any of the above processes as well as those typically associated with drying. The exposure of the pellets to hot moisture-free air is one such method, such as an industrial regenerative bed dryer is a well known technique. The final amount of moisture removed from the materials prior to drying is up to the practitioner. Therefore, for the purposes of this specification, the verb drying, or to dry, or drying, or drying step refers removing moisture from the polymer when the polymer is below its melt point. Drying does not refer to removing moisture in contact with the polymer, such as surface moisture during pelletizing. Drying does not refer to removing moisture to at or below a specified level. It is merely the removal of moisture below the melt point. Drying is done most efficiently by exposing the polymer, generally in the form of pellets, to a high temperature, but below the melt point of the polymer, in the presence of dehumidified air or inert gas such as nitrogen.

Once dried and at the proper I.V., the resin pellet can be made into injection molded parts such as preforms and the wall of a container. The wall of the container should be preferably between 8 and 21 mil thick.

One preferred composition is a polyethylene terephthalate copolymer, modified with an ionic compatibilizer present in the range of 90 to 99 weight percent of the total polymers in the composition, a polyamide, MXD6, present at between 10 and 1 weight percent of the total polymers in the composition, and a copper compound, present at between 20 to 500ppm on the basis of copper relative to the polyamide, an organic or inorganic bromine compound present in molar ratio of 1:1 to 1:15 of bromine to copper, and an iodine containing compound present in the molar ratio of 1:15 of iodine to copper.

One mixture of metal compounds to be added to the polyamide is commercially obtainable from Bruggemann Chemical, Germany as Bruggolen H 320 containing 10% CuI, 10% KI and 40% KBr and aluminum stearate with the

remainder being determined as non-critical to the maintenance of color.

## EXPERIMENTAL RESULTS

In generating the results, the following materials were used.

| NAME | DESCRIPTION |
|---|---|
| Polyester Ionic compatabilizer | A polyester polymer containing 0.5 mole percent of its acid units derived from lithium sulfoisophthalic acid (the ionic compatabilizer), 98 mole percent of its acid units derived from terephthalic acid and 1.5 mole percent of its acid units derived from isophthalic acid with ethylene glycol and diethylene glycol units. The polymer had an I.V. of approximately 0.84 dl/g. |
| Nylon | An MXD6 nylon having a relative viscosity of 1.7 (according to ISO 307) |
| NAUGARD® XL-1 available from Crompton Corp., Middlebury, CT USA | 2,2'-oxalyldiamidobis[ethyl 3-(3,5-di-t-butyl-4-hydroxyphenyl) propionate] |
| NYLOSTAB® S-EED available from Clariant Corp., Charlotte, NC USA | 1,3-Benzenedicarboxzmide, N,N'-bis(2,2,6,6-tetramethyl-4-piperidinyl)-, CAS number 42774-15-2 of the N,N'-Bis-2,2,6,6-tetramethyl-4-piperidinyl-1,3-benzene dicarboxamide family |
| SANDOSTAB® P-EPQ available from Clariant Corp., Charlotte, NC USA | Phosphorous trichloride reaction products with 1,1'-Biphenyl and 2,4-bis(1,1-dimethylethyl)phenol CAS Number 119345-01-6 of the aryl phosphonite family. |
| LOWINOX® HD 98 available from Great Lakes Chemical Corp., West Lafayette, IN USA | Benzenepropanamide,N,N'-1,6-hexanediylbis[3,5-bis(1,1-dimethylethyl)-4-hydroxy-, CAS Number 23128-74-7, also known as N,N'-Hexamethylene bis[3-3,5-di-t-butyl-4-hydroxyphenyl)propionamide. |
| LOWINOX® GP available from Great Lakes Chemical Corp., West Lafayette, IN USA | Triethyleneglycol-bis[3-(3-tert-butyl-4-hydroxy-5-methylphenyl)propionate], CAS Number 36443682, also known as benzenepropanoic acid, 3-(1,1-dimethyl)-4-hydroxy-5-methyl-1,2-ethanediyl bis(oxy-2,1-ethanediyl) ester of the steric hindered phenol family. |
| Lithium Stearate available from Alfa Aesar, Ward Hill, MA USA | Lithium Stearate, CAS Number 4485-12-5 |
| IRGANOX 1010® available from CIBA Specialty Chemicals, Inc., NJ, USA | Pentaerythritol Tetrakis(3-(3,5-di-tert-butyl-4-hydroxyphenyl)propionate), CAS Number 6683-19-8 |
| Lithium Hydroxide available from Sigma Aldrich, Saint Louis, MO USA | Lithium Hydroxide, CAS Number 1310-66-3 |
| Cupric Stearate available from City Chemical LLC., West Haven, CT, USA | Cupric Stearate, CAS Number 660-60-6 |

The specified stabilizer was melt first mixed into the MXD-6 polymer at the level specified in Table I and material ground from plaques analyzed for Hunter L*, a*, b* with the results specified in Table I.

Preforms were then made by melt mixing 95 parts of polyester having the ionic compatabilizer with 5 parts of the MXD-6 stabilized material made in the previous step. The preform colors, haze, and intrinsic viscosity are noted in Table II.

The preforms were then ground and the colors, haze, and intrinsic viscosity were measured and noted in Table III.

In some instances these preforms were converted to containers. The wall of the container was observed and it was noted that contrary to the state of the art understanding, surprisingly, no insolubles were observed in the wall of the container. The defects known to occur with copper compounds did not occur in this composition.

The ground performs were then thermally processed by drying in air at 176.7 °C (177 °C). The ability of the copper compound to prevent the discoloration during thermal processing is easily seen in Table III. After thermal processing, the Hunter b* color shift in the reground material was +6.4. The other stabilizers had a shift of 13 or more units.

In the second set of experiments, the materials indicated were made into preforms (Series A), the preforms were ground (Series B), exposed to hot air at 177 °C for 6 hours (Series C), and the resulting heat treated ground preform was then re-compounded with a standard bottle grade polyester at a 5% level by weight and injected into a preform (Series D). These results are shown in Table IV. Hunter b* was determined at the end of each series to demonstrate the impact of the copper containing stabilizer which had been compounded into the polyamide or respective PET. Runs 1.3 and 3.1 show the high color. Run 2.3 shows the improvement due to the Bruggolen of the known composition. Run 3.3 shows the advantage of the $CuBr_2$ at even low levels, it is comparable to 3.2 of Bruggolen.

## TEST METHODS

### Intrinsic Viscosity

The intrinsic viscosity of intermediate molecular weight and low crystalline poly(ethylene terephthalate) and related polymers which are soluble in 60/40 phenol/tetrachloroethane was determined by dissolving 0.1 grams of polymer or ground pellet into 25 ml of 60/40 phenol/tetrachloroethane solution and determining the viscosity of the solution at 30°C +/-0.05 relative to the solvent at the same temperature using a Ubbelohde 1B viscometer. The intrinsic viscosity is calculated using the Billmeyer equation based upon the relative viscosity.

The intrinsic viscosity of high molecular weight or highly crystalline poly(ethylene terephthalate) and related polymers which are not soluble in phenol/tetrachloroethane was determined by dissolving 0.1 grams of polymer or ground pellet into 25 ml of 50/50 trifluoroacetic acid/dichloromethane and determining the viscosity of the solution at 30°C +/- 0.05 relative to the solvent at the same temperature using a Type OC Ubbelohde viscometer. The intrinsic viscosity is calculated using the Billmeyer equation and converted using a linear regression to obtain results which are consistent with those obtained using 60/40 phenol/tetrachloroethane solvent. The linear regression is

**I.V. (in 60/40 phenol/tetrachloroethane) = 0.8229 x I.V(in 50/50 trifluoroacetic acid/dichloromethane) + 0.0124.**

Table I

| Experiment No. | Composition | Nylon Compounding | | |
|---|---|---|---|---|
| | | L* | a* | b* |
| **Control** | **Neat** | **87.43** | **-3.30** | **20.19** |
| Comparative Example 1 | 0.1% P-EPQ+0.5% S-EED | 82.51 | -2.89 | 14.73 |
| Comparative Example 2 | 0.3% HD 98 + 0.3% GP45 | 87.72 | -3.23 | 21.28 |
| Comparative Example 3 | 0.1%P-EPQ + 0.5% S-EED+0.5%NaugardXL-1 | 87.84 | -2.63 | 22.24 |
| Comparative Example 4 | 0.3% Irganox 1010 | 88.95 | -3.58 | 23.34 |
| Comparative Example 5 | 0.5% Naugard XL-1 | 89.23 | -3.57 | 22.34 |
| Comparative Example 6 | 0.2% LiStearate | 89.69 | -3.14 | 19.79 |
| Comparative Example 7 | 0.117% anhydrous LiOH | 87.82 | -2.58 | 18.96 |
| Comparative Example 8 | 0.235% anhydrous LiOH | 88.00 | -1.92 | 16.80 |
| Comparative Example 9 | 0.117% anhydrous LiOH +0.5% Naugard XL-1 | 86.13 | -0.73 | 20.30 |
| Working Example 1 | 0.05% cupric stearate | 77.32 | -7.96 | 12.51 |

TABLE II Preform Colors

| Example ID | AO Composition | Preform Colors at 5% Nylon in Polyester with Ionic Compatabilizer | | | | |
|---|---|---|---|---|---|---|
| | | L* | a* | b* | Haze | IV |
| Control1 | Neat | 43.51 | -1.45 | 0.76 | 58.59 | 0.752 |
| Comparative Example 1 | 0.1% P-EPQ+0.5% S-EED | 42.13 | -0.74 | -2.77 | 58.98 | 3.757 |
| Comparative Example 2 | 0.3% HD 98 + 0.3% GP45 | 41.75 | -1.10 | -4.46 | 58.75 | 0.746 |
| Comparative Example 3 | 0.1%P-EPQ + 0.5% S-EED+0.5%NaugardXL-1 | 42.25 | -1.01 | -4.84 | 58.57 | 0.773 |
| Comparative Example 4 | 0.3% Irganox 1010 | 42.90 | -1.10 | -3.93 | 58.19 | 0.760 |
| Comparative Example 5 | 0.5% Naugard XL-1 | 44.21 | -0.98 | -3.06 | 58.35 | 0.763 |
| Comparative Example 6 | 0.2% LiStearate | 42.64 | -0.71 | -0.39 | 58.57 | 0.775 |
| Comparative Example 7 | 0.117% anhydrous LiOH | 44.27 | -1.85 | 0.60 | 58.96 | 0.797 |
| Comparative Example 8 | 0.235% anhydrous LiOH | 43.91 | -1.70 | -0.25 | 59.13 | 0.768 |
| Comparative Example 9 | 0.117% anhydrous LiOH +0.5% Naugard XL-1 | 45.50 | -1.63 | 0.85 | 58.58 | 0.799 |
| Working Example 1 | 0.05% cupric stearate | 46.61 | -1.28 | 0.86 | 58.37 | 0.794 |

TABLE III COLOR BEFORE AND AFTER DRYING

| Example ID | AO Composition | Regrinds before drying | | | | Regrinds after drying, 176.7 °C, air, 6 hours | | | | |
|---|---|---|---|---|---|---|---|---|---|---|
| | | L* | a* | b* | IV | L* | a* | b* | IV | Moisture (ppm) |
| Control 1 | Neat (None) | 71.64 | -2.12 | -0.8 | 0.782 | 68.88 | -1.41 | 26.09 | 0.773 | 201 |
| Comparative Example 1 | 0.1 % P-EPQ+0.5% S-EED | 70.62 | -2.24 | -2.77 | 0.76 | 70.80 | -2.77 | 9.51 | 0.777 | 173 |
| Comparative Example 2 | 0.3% HD 98 + 0.3% GP45 | 71.46 | -2.51 | -2.59 | 0.758 | 70.37 | -1.07 | 10.47 | 0.787 | 169 |
| Comparative Example 3 | 0.1%P-EPQ + 0.5% S-EED+0.5%NaugardXL-1 | 73.27 | -2.43 | -2.64 | 0.758 | 70.93 | -2.32 | 11.79 | 0.781 | 144 |
| Comparative Example 4 | 0.3% Irganox 1010 | 72.28 | -2.55 | -2.43 | 0.762 | 70.42 | -2.65 | 14.89 | 0.796 | 163 |
| Comparative Example 5 | 0.5% Naugard XL-1 | 71.27 | -2.52 | -2.93 | 0.757 | 70.43 | -2.51 | 11.94 | 0.804 | 169 |
| Comparative Example 6 | 0.2% Lithium Stearate | 71.57 | -2.09 | -2.74 | 0.757 | 69.47 | -3.19 | 21.13 | 0.75 | 170 |
| Comparative Example 7 | 0.117% anhydrous LiOH | 70.92 | -2.66 | 0.18 | 0.789 | 68.52 | -1.27 | 28.29 | 0.76 | 180 |
| Comparative Example 8 | 0.235% anhydrous LiOH | 71.55 | -2.69 | -0.2 | 0.768 | 62.75 | 4.21 | 33.48 | 0.743 | 219 |
| Comparative Example 9 | 0.117% anhydrous LiOH +0.5% Naugard XL-1 | 70.92 | -2.7 | -0.42 | 0.796 | 69.02 | -1.66 | 17.25 | 0.789 | 172 |
| Working Example 1 | 0.05% cupric stearate | 70.83 | -2.6 | -1.74 | 0.776 | 71.83 | -1.88 | 4.77 | 0.809 | 191 |

TABLE IV

| | | Hunter b* | | | |
|---|---|---|---|---|---|
| Run # | Description | S. A Preform | S. B Grind | S. C Grind after Hot Air | S. D 5% in PET Preform |
| 1.1 | Polyethylene Terephthalate Copolymer | 0.44 | -3.98 | -3.06 | 0.82 |
| 1.2 | Polyethylene Terephthalate Copolymer modified with LiSIPA | -0.99 | -4.69 | -3.77 | 0.72 |
| 1.3 | Polyethylene Terephthalate Copolymer with modified with LiSIPA and 5% MXD6 | 0.72 | -4.61 | 25.53 | 10.83 |
| | | | | | |
| 2.1 | Polyethylene Terephthalate Copolymer with 1500ppm Bruggolen H320 | 2.24 | -3.02 | -2.09 | 2.11 |
| 2.2 | Polyethylene Terephthalate Copolymer modified with LiSIPA, 1500ppm Bruggolen H320 | 0.61 | -3.85 | -2.09 | 2.53 |
| 2.3 | Polyethylene Terephthalate Copolymer with modified with LiSIPA and 5% MXD6, 1500ppm Bruggelon in polyamide | 2.45 | -3.71 | 3.79 | 3.82 |
| 3.1 | Polyethylene Terephthalate Copolymer modified with LiSIPA and 5% MXD6 | 10.40 | 3.19 | 31.46 | 18.19 |
| 3.2 | Polyethylene Terephthalate Copolymer modified with LiSIPA and 5% MXD6, 1500ppm Bruggolen H320 | 11.85 | 4.5 | 10.96 | 5.32 |
| 3.3 | Polyethylene Terephthalate Copolymer modified with LiSIPA and 5% MXD6, 190 ppm $CuBr_2$ in the polyamide. | 10.08 | 1.63 | 9.45 | 3.81 |

## Claims

**1.** A process for thermally treating a resin pellet comprising a resin composition comprising a polyester, a polyamide, an ionic compatibilizer which is a metal sulfonate incorporated into the polyester and a copper compound, wherein the copper compound is cupric stearate, copper iodide or copper bromide and the amount of polyamide is between 1 and 15 parts per 100 parts of the polyester plus polyamide wherein the process comprises exposing the resin pellet to a temperature in the range of 70°C and 1°C less than the temperature at which the resin pellet becomes liquid for a period of time, where the period of time is selected from the group consisting of time sufficient to remove 25% of the water from the resin pellet, in case water is also present in said pellet, or time sufficient to increase the Intrinsic Viscosity of the polyester in the resin pellet by at least about 0.05 dl/g,
wherein the intrinsic viscosity of intermediate molecular weight and low crystalline poly(ethylene terephthalate) and related polymers which are soluble in 60/40 phenol/tetrachloroethane is determined by dissolving 0.1 grams of polymer or ground pellet into 25 ml of 60/40 phenol/tetrachloroethane solution, determining the viscosity of the solution at 30°C ± 0.05 relative to the solvent at the same temperature using a Ubbelohde IB viscometer, and calculating the intrinsic viscosity using the Billmeyer equation based upon the relative viscosity, and the intrinsic viscosity of high molecular weight or highly crystalline poly(ethylene terephthalate) and related polymers which are not soluble in phenol/tetrachloroethane is determined by dissolving 0.1 grams of polymer or ground pellet into 25 ml of 50/50 trifluoroacetic acid/dichloromethane, determining the viscosity of the solution at 30°C ± 0.05 relative to the solvent at the same temperature using a Type OC Ubbelohde viscometer, and calculating the intrinsic viscosity using the Billmeyer equation and conversion by linear regression to obtain results which are consistent with those obtained using 60/40 phenol/tetrachloroethane solvent, which linear regression is:

I.V. (in 60/40 phenol/tetrachloroethane)= 0.8229 x I.V(in 50/50 trifluoroacetic acid/dichloromethane) + 0.0124. >

2. The process of claim 1, wherein the resin pellet further comprises an iodide compound.

3. The process of claim 1, wherein the resin pellet further comprises a halogenated compound.

4. The process of any of claims 1 through 3 wherein the polyamide is MXD6 nylon.

5. The process of claim 1 wherein the copper compound is present in the range of about 5 to 500 ppm by the weight of copper to the weight of the polyamide.

## Patentansprüche

1. Ein Verfahren zur Wärmebehandlung eines Harzpellets, umfassend eine Harzzusammensetzung, umfassend einen Polyester, ein Polyamid, einen ionischen Verträglichkeitsvermittler, welcher ein in dem Polyester eingearbeitetes Metallsulfonat ist, und eine Kupferverbindung, wobei die Kupferverbindung Kupferstearat, Kupferiodid oder Kupferbromid ist und die Menge an Polyamid zwischen 1 und 15 Teilen pro 100 Teilen des Polyesters plus Polyamid liegt, wobei das Verfahren Aussetzen des Harzpellets einer Temperatur im Bereich von 70°C und 1°C weniger als die Temperatur, bei der das Harzpellet flüssig wird, über einen Zeitraum umfasst, wobei der Zeitraum aus der Gruppe, bestehend aus Zeit, die ausreicht, um 25% des Wasser aus dem Harzpellet zu entfernen, sofern ebenfalls Wasser in dem Pellet vorhanden ist, oder Zeit, die ausreicht, um die intrinsische Viskosität des Polyesters in dem Harzpellet um mindestens etwa 0,05 dl/g zu erhöhen, ausgewählt ist,
wobei die intrinsische Viskosität von Poly(ethylentherephthalat) mit mittlerem Molekulargewicht und niedriger Kristallinität und verwandten Polymeren, welche in 60/40 Phenol/Tetrachlorethan löslich sind, durch Auflösen von 0,1 Gramm Polymer oder gemahlenem Pellet in 25 ml 60/40 Phenol/Tetrachlorethan-Lösung, Bestimmen der Viskosität der Lösung bei 30°C ± 0,05, bezogen auf das Lösungsmittel bei derselben Temperatur, mittels eines Ubbelohde IB Viskosimeters und Berechnen der intrinsischen Viskosität unter Verwendung der Billmeyer-Gleichung auf Grundlage der relativen Viskosität bestimmt wird und die intrinsische Viskosität von Poly(ethylentherephthalat) mit hohem Molekulargewicht oder hoher Kristallinität und verwandter Polymere welche nicht in Phenol/Tetrachlorethan löslich sind, durch Auflösen von 0,1 Gramm Polymer oder gemahlenem Pellet in 25 ml 50/50 Trifluoressigsäure/Dichlormethan, Bestimmen der Viskosität der Lösung bei 30°C ± 0,05, bezogen auf das Lösungsmittel bei derselben Temperatur, mittels eines Typ OC Ubbelohde Viskosimeters, und Berechnen der intrinsischen Viskosität unter Verwendung der Billmeyer-Gleichung und Umwandlung durch lineare Regression bestimmt wird, um Ergebnisse zu erhalten, welche mit denen im Einklang sind, die unter Verwendung von 60/40 Phenol/Tetrachlorethan-Lösungsmittel erhalten wurden, wobei die lineare Regression ist:

I.V. (in 60/40 Phenol/Tetrachlorethan) = 0,8229 x I.V. (in 50/50 Trifluoressigsäure/Dichlormethan) + 0,0124.

2. Das Verfahren nach Anspruch 1, wobei das Harzpellet ferner eine Iodidverbindung umfasst.

3. Das Verfahren nach Anspruch 1, wobei das Harzpellet ferner eine halogenierte Verbindung umfasst.

4. Das Verfahren nach einem der Ansprüche 1 bis 3, wobei das Polyamid MXD6-Nylon ist.

5. Das Verfahren nach Anspruch 1, wobei die Kupferverbindung im Bereich von etwa 5 bis 500 Gewichts-ppm Kupfer, bezogen auf das Gewicht des Polyamids, vorliegt.

## Revendications

1. Procédé pour traiter thermiquement une pastille de résine comprenant une composition de résine comprenant un polyester, un polyamide, un compatibilisant ionique qui est un sulfonate métallique incorporé dans le polyester et un composé du cuivre, où le composé du cuivre est le stéarate cuivrique, l'iodure de cuivre ou le bromure de cuivre

et la quantité de polyamide est entre 1 et 15 parties pour 100 parties du polyester plus le polyamide où le procédé comprend l'exposition de la pastille de résine à une température dans la plage de 70°C et 1°C de moins que la température à laquelle la pastille de résine devient liquide pendant une durée, où la durée est choisie dans le groupe consistant en une durée suffisante pour retirer 25 % de l'eau de la pastille de résine, dans le cas où de l'eau est présente aussi dans ladite pastille, ou une durée suffisante pour augmenter la viscosité intrinsèque du polyester dans la pastille de résine d'au moins environ 0,05 dl/g, où la viscosité intrinsèque de poly(éthylène téréphtalate) de masse moléculaire intermédiaire et faiblement cristallin et de polymères apparentés qui sont solubles dans le phénol/tétrachloroéthane 60/40 est déterminée par dissolution de 0,1 gramme de polymère ou de pastille broyée dans 25 ml de solution de phénol/tétrachloroéthane 60/40, détermination de la viscosité de la solution à 30°C ± 0,05 par rapport au solvant à la même température au moyen d'un viscosimètre Ubbelohde IB, et calcul de la viscosité intrinsèque au moyen de l'équation de Billmeyer sur la base de la viscosité relative, et la viscosité intrinsèque de poly(éthylène téréphtalate) de haute masse moléculaire ou hautement cristallin et de polymères apparentés qui ne sont pas solubles dans le phénol/tétrachloroéthane est déterminée par dissolution de 0,1 gramme de polymère ou de pastille broyée dans 25 ml d'acide trifluoroacétique/dichlorométhane 50/50, détermination de la viscosité de la solution à 30°C ± 0,05 par rapport au solvant à la même température au moyen d'un viscosimètre Ubbelhode de type OC, et calcul de la viscosité intrinsèque au moyen de l'équation de Billmeyer et conversion par régression linéaire pour obtenir des résultats qui sont en accord avec ceux obtenus au moyen du solvant phénol/tétrachloroéthane 60/40, laquelle régression linéaire est :

V.I. (dans le phénol/tétrachloroéthane 60/40) = 0,8229 x V.I. (dans l'acide trifluoroacétique/dichlorométhane 50/50) + 0,0124.

**2.** Procédé selon la revendication 1, où la pastille de résine comprend en outre un composé iodure.

**3.** Procédé selon la revendication 1, où la pastille de résine comprend en outre un composé halogéné.

**4.** Procédé selon l'une quelconque des revendications 1 à 3, où le polyamide est le nylon MXD6.

**5.** Procédé selon la revendication 1, où le composé du cuivre est présent dans la plage d'environ 5 à 500 ppm en poids de cuivre par rapport au poids de polyamide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5929178 A
- GB 652947 A
- GB 839067 A
- JP 227201963 B
- WO 2006023583 A
- US 6500895 B
- JP 03281246 A
- WO 2005023530 A1
- US 3936389 A
- US 3899470 A
- US 5178950 A


### Non-patent literature cited in the description


- **G.KOSTA ; E. RESIENHEFER ; L.STAFANI.** *J. Inorg. Nuki. chem,* vol. 27, 2581
- **FU JARDINE ; L. RULE ; A.G. VORHEI.** *J. Chem. Soc. (Q),* 238-241